**Europäisches Patentamt**

**European Patent Office**

**Office européen des brevets**

(11) Veröffentlichungsnummer: **0 246 524**
**A1**

## (12) EUROPÄISCHE PATENTANMELDUNG

(21) Anmeldenummer: **87106763.3**

(22) Anmeldetag: **09.05.87**

(51) Int. Cl.³: **B 65 G 65/20**

(30) Priorität: **14.05.86 DE 3616147**

(43) Veröffentlichungstag der Anmeldung:
**25.11.87 Patentblatt 87/48**

(84) Benannte Vertragsstaaten:
**BE DE FR GB NL**

(71) Anmelder: **Oppermann + Deichmann Inh. Reinhard Lippe Maschinenfabrik**
**Pfingststrasse 12**
**D-3300 Braunschweig(DE)**

(72) Erfinder: **Lippe, Reinhard, Dipl.-Ing.**
**Auf dem Anger 9**
**D-3300 Braunschweig(DE)**

(72) Erfinder: **Voigt, Dietmar David Mausfeldweg 11**
**D-3300 Braunschweig(DE)**

(74) Vertreter: **Döring, Rudolf, Dr.-Ing.**
**Patentanwälte Dr.-Ing. R. Döring Dipl.-Phys. Dr. J. Fricke**
**Jasperallee 1a**
**D-3300 Braunschweig(DE)**

(54) Vorrichtung zum Aufnehmen und Abfördern von in Haufwerken gelagerten Feldfrüchten.

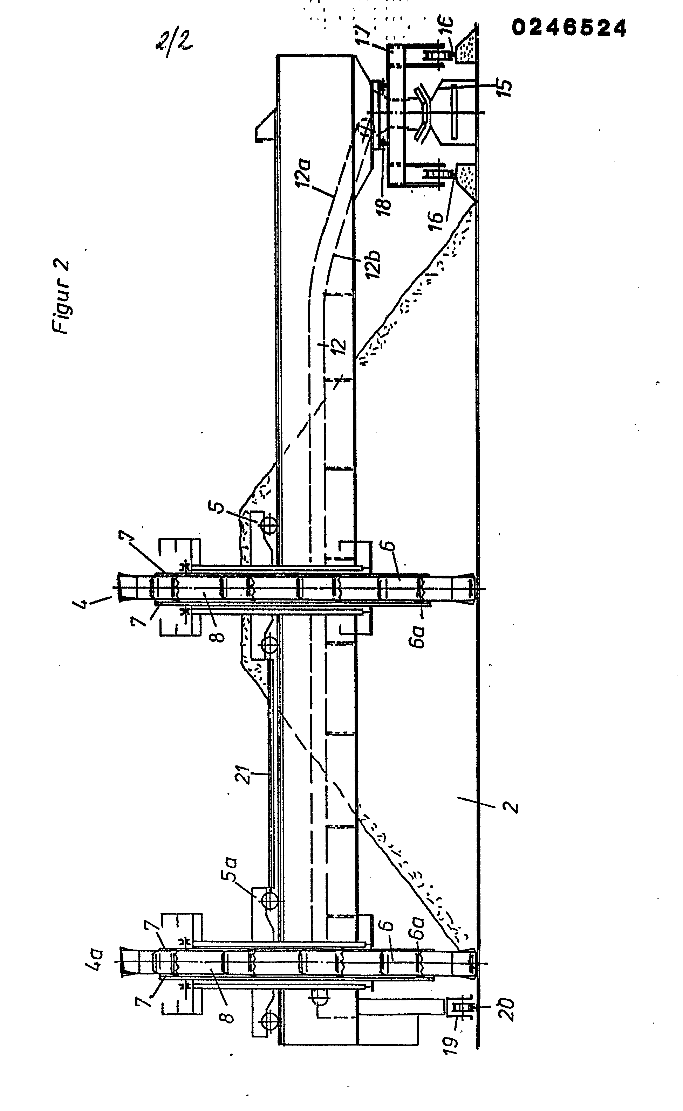

(57) Die Vorrichtung zum Aufnehmen von in Haufwerken gelagerten Feldfrüchten weist eine längs des Haufwerkes (2) verfahrbare, sich über die Breite des Haufwerkes erstreckende Brücke (1) auf, auf der zwei längs der Brücke verfahrbare rotierend antreibbare Schaufelräder (4, 4a) gehalten sind. Die beiden Schaufelräder (4, 4a) weisen eine übereinstimmende Ausbildung auf und sind mit kratzerförmigen Schaufeln (6) und einem der Krümmung des Rades angepaßten ortsfesten Boden (8) ausgerüstet, über welchen die Schaufeln bis zur Entleerung hinweggleiten. Die Schaufelräder (4, 4a) sind auf der Brücke (1) in einem Abstand angeordnet, der etwa der halben Breite des Haufwerkes (2) entspricht, und zum gemeinsamen Verfahren längs der Brücke (1) unter Aufrechterhaltung ihres Abstandes über austauschbare Koppelglieder (21) miteinander verbunden. Durch die beschriebene Anordnung der Schaufelräder und ihre gemeinsame Verfahrbewegung wird trotz der seitlichen Abböschung des Haufwerkes stets die gleiche Menge der Feldfrüchte pro Zeiteinheit von dem Haufwerk aufgenommen und auf ein Brückenförderband (12) überführt. (Fig. 2).

./...

Figur 2

Oppermann + Deichmann
Inh. Reinhard Lippe
Maschinenfabrik
Pfingststr. 12

3300 Braunschweig

Vorrichtung zum Aufnehmen und Abfördern von in Haufwerken gelagerten Feldfrüchten

Die Erfindung betrifft eine Vorrichtung zum Aufnehmen
und Abfördern von in Haufwerken, insbesondere offenen
Silos, gelagerten Feldfrüchten, vorzugsweise Zuckerrüben, gemäß dem Gattungsbegriff des Anspruches 1.

Es sind Vorrichtungen der genannten Art bekannt, welche
insbesondere bei großräumigen Lagerflächen für die
Feldfrüchte und zur Erzielung hoher Förderkapazitäten
in jüngerer Zeit eingesetzt werden.

Die für die Aufnahme der Feldfrüchte vorgesehenen
Schaufelräder werden über die Breite des Haufwerkes
längs der sie tragenden Brücke verfahren und greifen
dabei mit ihren Schaufeln in das Haufwerk ein, um
die Feldfrüchte aufzunehmen und sie über eine Zuführeinrichtung auf das Brückenförderband zu überführen.

2

Da die Haufwerke der Feldfrüchte in der Regel eine mietenartige Form mit einer sich in Längsrichtung der Haufwerke erstreckenden Krone und beidseitigen bis zum Grund des Haufwerkes verlaufenden Abböschungen aufweisen, wird von dem Schaufelrad bei dessen quer zur Längsrichtung des Haufwerkes erfolgenden Bewegung je nach Stellung des Schaufelrades zwischen dem seitlichen Randbereich des Haufwerkes und der Haufwerkskrone eine unterschiedliche Menge der Feldfrüchte pro Zeiteinheit erfaßt und auf das Brückenförderband überführt. Hierdurch ergibt sich eine ungleichmäßige Zuführung der Feldfrüchte zu den Weiterverarbeitungsstationen, welche nur mit einem großen Aufwand, beispielsweise über einen Zwischenbunker, als Pufferstation ausgeglichen werden könnte. Abgesehen von dem großen baulichen Aufwand für einen solchen Zwischenbunker mit zugehöriger Austragseinrichtung ergibt sich bei der Überführung der Feldfrüchte in den Zwischenbunker und bei der erneuten Entnahme aus diesem Bunker ein zusätzlicher Verlust durch Beschädigung der Feldfrüchte, der insbesondere bei Zuckerrüben zu großen Nachteilen hinsichtlich der Ausbeute und Weiterverarbeitung führt.

Der Erfindung liegt die Aufgabe zugrunde, eine Vorrichtung der einleitend genannten Art so weiterzubilden, daß bei gleichmäßiger Räumung des Haufwerkes quer zu seiner Längserstreckung eine weitestgehend gleichbleibende Menge der Feldfrüchte pro Zeiteinheit auf das Brückenförderband überführt wird.

Zur Lösung vorstehender Aufgabe kennzeichnet sich die einleitend genannte Vorrichtung erfindungsgemäß dadurch, daß in Längsrichtung der Brücke gesehen im Abstand von dem Schaufelrad ein zweites Schaufelrad vorgesehen ist, welches in derselben Weise ausgebildet ist wie das erste Schaufelrad und die Feldfrüchte auf das Brückenförderband überführt, und daß der Abstand der Schaufelräder etwa der halben Breite des Haufwerkes entspricht.

Durch die vorgenannte Ausführung werden die Schwankungen der Gutaufnahme der Schaufelräder weitestgehend ausgeglichen. Wenn nämlich das eine Schaufelrad im Bereich der Krone des Haufwerkes arbeitet, befindet sich das andere Schaufelrad in dem Randbereich des Haufwerkes, in welchem die Haufwerkshöhe sehr gering ist. Bei der gemeinsamen seitlichen Verschiebung gelangt das zunächst im Bereich der Krone des Haufwerkes arbeitende Schaufelrad in den zur Seite hin abgeböschten Teil des Haufwerkes, in welchem die Höhe des Haufwerkes abnimmt, während andererseits das zunächst am Rande des Haufwerkes arbeitende Schaufelrad in Richtung zur Krone des Haufwerkes und somit in Bereiche zunehmender Höhe des Haufwerkes überführt wird. Die Summe der von den Schaufelrädern aufgenommenen Feldfrüchte pro Zeiteinheit und die somit von den Schaufelrädern auf den Brückenförderer überführte Menge der Feldfrüchte pro Zeiteinheit wird auf diese Weise praktisch konstant gehalten.

Die Maximalleistung eines jeden Schaufelrades kann im Vergleich mit nur einem quer zum Haufwerk verfahrbaren Schaufelrad geringer gehalten werden. Zwar ist für die beiden Schaufelräder eine höhere Gesamtantriebsleistung erforderlich, jedoch ist diese nicht doppelt so hoch wie bei Verwendung nur eines Schaufelrades.

Besonders zweckmäßig ist es, wenn die Schaufelräder über an ihren Fahrwerken austauschbar befestigte Zug und Druck übertragende Koppelglieder miteinander verbunden sind. Bei dieser Ausgestaltung ist lediglich eines der Fahrwerke der Schaufelräder mit einem Antrieb zu versehen, um beide Schaufelräder synchron längs der Brücke verfahren zu können. Dabei können in besonders einfacher Weise die Koppelglieder als Koppelstangen ausgebildet sein.

Durch die vorgesehene Kopplung der beiden Fahrwerke der Schaufelräder wird der Abstand der Schaufelräder über ihre gesamte Verfahrbewegung jeweils konstant gehalten und kann durch austauschbare Koppelglieder der jeweiligen Breite des Haufwerkes angepaßt werden, von dem die Feldfrüchte aufgenommen werden sollen.

Die Zeichnung gibt ein Ausführungsbeispiel der Erfindung in schematischer Darstellung wieder.

Es zeigen:

Fig. 1 die Draufsicht auf eine Vorrichtung nach der Erfindung,

Fig. 2 die Ansicht in Richtung des Pfeiles A gegen die Vorrichtung nach Fig. 1.

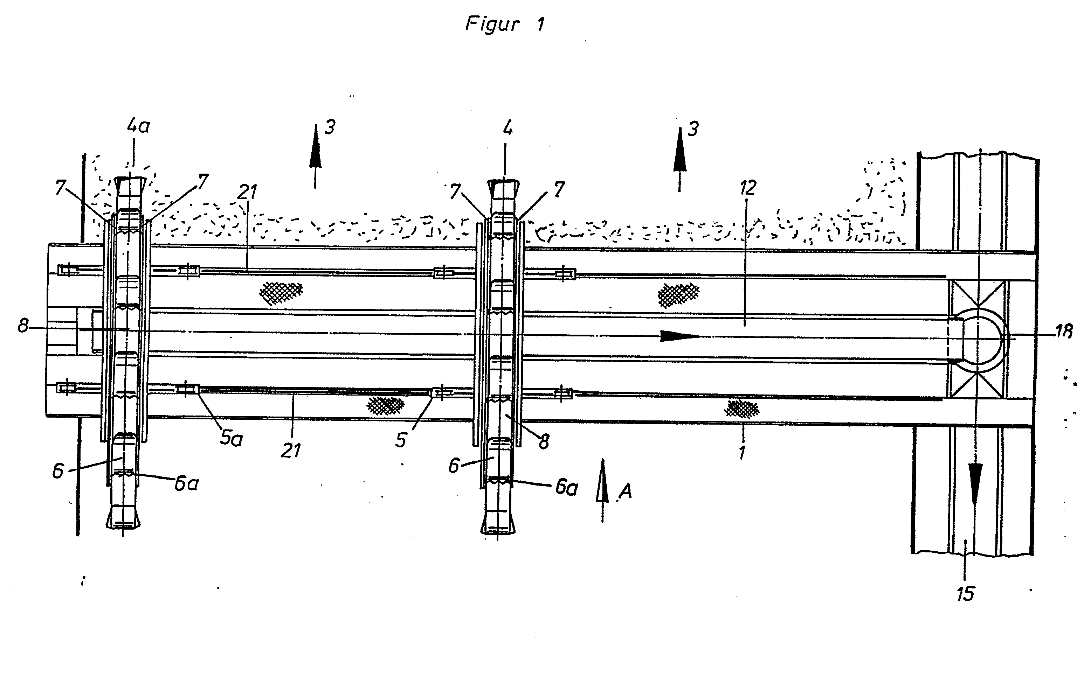

In den Figuren ist eine verfahrbare Brücke 1 dargestellt, die in Richtung der in Fig. 1 wiedergegebenen Pfeile 3 verfahrbar ist. Die Brücke 1 erstreckt sich dabei über die Breite eines Haufwerkes 2 und trägt zwei insgesamt mit 4 und 4a bezeichnete Schaufelräder, durch welche sich die Brücke 1 hindurch erstreckt. Die Schaufelräder 4 und 4a sind jeweils an einem Fahrwerk 5 bzw. 5a montiert, die auf an der Oberseite der Brücke 1 vorgesehenen Schienen verfahrbar sind, so daß die Schaufelräder 4 und 4a auf der Brücke 1 in deren Längsrichtung, also quer zur Längserstreckung des Haufwerkes 2 hin und her verfahren werden können.

Die Schaufelräder 4 und 4a sind in derselben Weise ausgebildet, d.h. mit gleichartigen ggf. gekoppelten Antrieben für ihre umlaufende Bewegung um ihre fluchtend miteinander verlaufenden Mittelachsen ausgerüstet, so daß sie synchrone Umlaufbewegungen ausführen.

Jedes Schaufelrad ist mit kratzerartigen Schaufeln 6 versehen, die zwischen im Abstand zueinander gehaltenen Radkränze 7 auf dem Umfang verteilt angeordnet sind. Die ratzerförmigen Schaufeln 6 weisen einen U-förmigen Querschnitt auf und sind an ihren in Förderrichtung weisenden Kanten mit Greiferblechen 6a ausgerüstet.

Die Kratzerschaufeln 6 gleiten bei der Rotationsbewegung der mit ihnen verbundenen Radkränzen 7 auf einem der Krümmung der Radkränze angepaßten ortsfesten und zwischen den Radkränzen angeordneten Boden 8, welcher im Bereich der sich aufwärtsbewegenden Kratzerschaufeln 6 oberhalb der Mittellängsachse der Schaufelräder 4 bzw. 4a eine Durchtrittsöffnung aufweist, durch welche die von den Kratzerschaufeln 6 aus dem Haufwerk 2 mitgenommenen Feldfrüchte in eine Überleiteinrichtung überführt werden.

Die in der Zeichnung nicht wiedergegebene Überleiteinrichtung, welche ggf. auch aus einem Zwischenförderband bestehen kann, dient zur Überführung der Feldfrüchte auf ein Brückenförderband 12, welches sich in Längsrichtung der Brücke 1 erstreckt. Die Brücke 1 ist in der Regel als Fachwerkkonstruktion bzw. als geschlossene Kastenkonstruktion gefertigt, so daß in ihrem Inneren das Brückenförderband 12 geschützt untergebracht werden kann. In dem dargestellten Beispiel ist das Brückenförderband 12 als endloses Förderband mit einer in den Figuren nicht wiedergegebenen Antriebseinrichtung ausgebildet. Das obere Trum 12a bildet das Fördertrum, während das untere Trum 12b das Leertrum darstellt.

Die Brücke 1 stützt sich in dem dargestellten Beispiel mit ihrem in der Zeichnung rechten Ende über einen Drehkranz 18 auf einem Fahrwerk 17 ab, das seinerseits auf zwei parallelen Schienen 16 geführt ist, die auf einem erhöhten Fundament angeordnet sind. Das in den Figuren linke Ende der Brücke 1 stützt sich über ein weiteres Fahrwerk 19 ohne Drehkranz ebenfalls auf einer Schiene 20 ab.

Zwischen den im rechten Teil der Figuren wiedergegebenen Schienen 16 ist ein Weiterförderer 15 erkennbar, auf den die von den Schaufelräder 4 und 4a aufgenommenen sowie dem Brückenförderband 12 zugeführten Feldfrüchte übergeben und zur Weiterverarbeitung weitergeleitet werden. Um die Fallhöhe der Feldfrüchte bei der Übergabe auf den Weiterförderer 15 zu verringern, ist der im rechten Teil der Fig.2 erkennbare Abschnitt des Brückenbandförderers 12 nach unten geneigt ausgeführt.

Die Schaufelräder 4 und 4a sind in dem dargestellten Beispiel über Zug und Druck übertragende Koppelglieder in Form von Koppelstangen 21 miteinander verbunden. Die Koppelstangen 21 greifen dabei lösbar an den Fahrwerken 5 bzw. 5a an, so daß zum Verfahren der Schaufelräder 4 und 4a längs der Brücke 1 nur eines der Fahrwerke 5 oder 5a mit einem entsprechenden Antrieb ausgerüstet werden muß. Die Länge der Koppelstange 21 richtet sich nach der Breite des Haufwerkes 2. Der Abstand der Schaufelräder 4 und 4a wird durch entsprechende Wahl der Länge der Koppelstangen so eingestellt, daß bei der Stellung des einen Schaufelrades im Bereich der Randzone des Haufwerkes das andere Schaufelrad etwa in der Mitte der Krone des Haufwerkes steht, wie dies in den Figuren wiedergegeben ist.

In dieser Stellung erfolgt durch das am Rand befindliche Schaufelrad 4a kaum eine Aufnahme des Gutes aus dem Haufwerk 2, während das andere Schaufelrad 4 mit seiner höchsten Förderleistung die Feldfrüchte aus dem Haufwerk entnimmt und auf das Brückenförderband 12 überführt.

Die in den Figuren wiedergegebene Stellung der Schaufelräder ist die eine Endstellung, aus der die beiden Schaufelräder 4 und 4a in den wiedergegebenen Figuren nach rechts so weit verfahren werden, bis das Schaufelrad 4 den rechten Rand des Haufwerkes 2 erreicht und das Schaufelrad 4a im Bereich der Kronenmitte des Haufwerkes steht.

Es ist ersichtlich, daß bei dieser Verfahrbewegung das zum Rand des Haufwerkes hin verfahrbare Schaufelrad laufend eine geringere Menge der Feldfrüchte aufnimmt, während das zur Krone verfahrbare Schaufelrad entsprechend mehr Feldfrüchte erfaßt, so daß bei einer gleichmäßigen Verfahrbewegung der Schaufelräder 4 und 4a längs der Brücke 1 etwa stets die gleiche Menge der Feldfrüchte aufgenommen und auf dasBrückenförderband 12 überführt wird.

8

## Ansprüche

1. Vorrichtung zum Aufnehmen und Abfördern von in Haufwerken, insbesondere offenen Silos, gelagerten Feldfrüchten, vorzugsweise Zuckerrüben, mit einer in Längsrichtung des Haufwerkes verfahrbaren, sich über die Breite des Haufwerkes erstreckenden Brücke, einem die Brücke einschließenden sowie längs der Brücke auf einem Fahrwerk verfahrbaren, rotierend antreibbaren Schaufelrad mit kratzerförmigen Schaufeln und einem den Schaufeln zugeordneten, der Krümmung des Rades angepaßten ortsfesten Boden, über welchen die Schaufeln bis zur Entleerung hinweggleiten, und einem in Brückenlängsrichtung durch das Schaufelrad hindurchgehenden antreibbaren Brückenförderband, welchem die Feldfrüchte aus den Schaufeln über eine in dem Schaufelrad vorgesehene Zuführeinrichtung zugeleitet werden, die sich von dem in Mitnahmerichtung liegenden Ende des Bodens oder einer Aussparung im Boden zu dem Brückenförderband erstreckt, d a d u r c h   g e k e n n z e i c h - n e t, daß in Längsrichtung der Brücke (1) gesehen im Abstand von dem Schaufelrad (4) ein zweites Schaufelrad (4a) vorgesehen ist, welches in derselben Weise ausgebildet ist wie das erste Schaufelrad und die Feldfrüchte auf das Brückenförderband (12) überführt, und daß der Abstand der Schaufelräder (4 bzw. 4a) etwa der halben Breite des Haufwerkes (2) entspricht.

2. Vorrichtung nach Anspruch 1, d a d u r c h   g e - k e n n z e i c h n e t, daß die Schaufelräder (4 bzw. 4a) über an ihren Fahrwerken (5 bzw. 5a) austauschbar befestigte Zug und Druck übertragende Koppelglieder (21) miteinander verbunden sind.

3. Vorrichtung nach Anspruch 2, d a d u r c h   g e - k e n n z e i c h n e t, daß die Koppelglieder als Koppelstangen (21) ausgebildet sind.

# Figur 1

Figur 2

0246524

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 298 494 (PFEILSCHIFTER) <br> * Spalte 3; Spalte 4, Zeilen 1-33; Abbildungen 1-5 * | 1 | B 65 G 65/20 |
| X | US-A-3 224 604 (ADLER) <br> * Spalte 2, Zeilen 22-72; Spalten 3,4; Figuren 1,2,3 * | 1,2 | |
| X | AU-A- 415 655 (POHLIG-HECKEL) <br> * Seite 4, letzter Abschnitt; Abbildungen 1-6 * | 1 | |
| A | DE-A-2 541 048 (BABCOCK) <br> ----- | | |

| RECHERCHIERTE SACHGEBIETE (Int. Cl.4) |
|---|
| A 01 D <br> B 65 G |

Der vorliegende Recherchenbericht wurde für alle Patentansprüche erstellt.

| Recherchenort | Abschlußdatum der Recherche | Prüfer |
|---|---|---|
| DEN HAAG | 27-08-1987 | VERMANDER R.H. |